# EUROPÄISCHE PATENTANMELDUNG

(11) **EP 2 194 371 A1**
(43) Veröffentlichungstag der Anmeldung: **09.06.2010**
(21) Anmeldenummer: 08020931.5
(22) Anmeldetag: 03.12.2008
(51) Int. Cl.: G01N 15/06

(54) **Kondenstionspartikelzähler**

(71) Anmelder: GIP Messinstrumente GmbH, 06774 Pouch (DE)
(72) Erfinder: Grimm,Hans Jürgen, 83404 Ainring (DE)
(74) Vertreter: Tragsdorf, Bodo

(57) **Zusammenfassung**

Kondensationspartikelzähler zur Bestimmung der Konzentration von in einem Gasstrom, wie z.B. Luft, enthaltenen Partlkeln (Aerosol) mit Größen von wenigen Nanometern bis zu einigen Mikrometern, die durch Kondensationswachstum vergrößert werden, wobei die Messung der Partikelkonzentration vorzugsweise nach dem Prinzip der Streulichtmessung erfolgt.
Hierzu wird als Lösung vorgeschlagen, dass im Strömungskanal (2) des Saturators (1) zentrisch ein als Stab (7) ausgebiidetes Verdrängungselement zur Vergleichmäßigung der Strömungsgeschwindigkeit des Aerosols angeordnet ist.
Der Verdrängungsstab (7) ist z.B. als runder Vollstab ausgebildet, besitzt eine glatte Oberfläche und ist an dem zur Eintrittsöffnung (4) gegenüberliegenden Endabschnitt (8) des Saturators (1) befestigt. Er erstreckt sich bis an die Eintrittsöffnung (4) des Saturators (1).

## Beschreibung

Die Erfindung bezieht sich auf einen Kondensationspartikelzähler zur Bestimmung der Konzentration von in einem Gasstrom, wie z.B. Luft, enthaltenen Partikeln (Aerosol) mit Größen von wenigen Nanometern bis zu einigen Mikrometern, die durch Kondensationswachstum vergrößert werden, wobei die Messung der Partikelkonzentration vorzugsweise nach dem Prinzip der Streulichtmessung erfolgt.

Kondensationspartikelzähler sind bereits seit langem bekannt und werden als Condensation Particle Counter (CPC) oder auch als Condensation Nucleous Counter (CNC) bezeichnet. Die wesentlichen Bauteile dieser Geräte sind ein beheizter Saturator bzw. Sättiger, ein Kondensator und eine Messzelle, wie z.B. eine Laser-Optik-Einheit mit Fotodiode.

Der Volumenstrom des Aerosols wird über eine am Auslass des Gerätes angeordnete Pumpe erzeugt.

Der Saturator besteht aus einem porösen Bauteil, z.B. einem Rohr mit einem porösen Belag, wobei der poröse Teil mit einer zu verdampfenden Arbeitsflüssigkeit, wie beispielsweise Butanol, Alkohol oder Wasser, in Kontakt steht. Durch die Beheizung des Saturators wird der Dampfdruck der Arbeitsflüssigkeit erhöht. Durch eine Temperierung kann die Dampfmenge eingestellt werden. Das Aerosol wird im Saturator mit dem Dampf durchmischt. Partikel und Dampf gelangen anschließend in den gekühlten Kondensator, wobei der übersättigte Dampf auf den Partikeln kondensiert. Durch den Kondensationsprozess vergrößern sich die Partikel (Kondensationswachstum) auf eine Größe von einigen Mikrometern. Dieses Wachstum ergibt sich aus der Übersättigung des kondensierten Dampfes im umschließenden Gas. Während des Kondensationsvorganges anfallendes Kondensat, das aus der im Gas enthaltenen Feuchtigkeit (Luftfeuchte) und kondensierter Arbeitsflüssigkeit besteht, wird aus dem Kondensator abgeführt. Dieses wird entweder entsorgt oder das kondensierte Wasser wird von der Arbeitsflüssigkeit getrennt, wie in der US 5,118,959 A beschrieben.

Die im Kondensator aufkondenslerten Partikel gelangen über eine Düse in eine optische Messzelle und werden in dieser gezählt.

Die bekannten CPC's bestehen aus einem kompakten Gehäuse, in dem die einzelnen Baugruppen angeordnet sind. In der Regel sind der Kondensator und die nachgeordnete Messzelle in vertikaler Ausrichtung angeordnet. Der Saturator kann in vertikaler oder im Wesentlichen horizontaler Lage angeordnet sein.

Das mittels der Pumpe angesaugte Gas durchströmt den Saturator und wird dabei mit einem kondensierbaren Dampf, wie z.B. Butanol, vermischt und gleichzeitig erwärmt. In der Mitte des Saturators ist die Strömungsgeschwindigkeit am größten und nimmt in Richtung zur Wand ab. Gleichzeitig breitet sich der erzeugte Dampf von der Wandung der Saturatorkammer in Richtung Mitte aus. Zwischen dem gebildeten Dampf und dem Gas bzw. der Luft findet ein Wärmeaustausch statt. Die sehr unterschiedlichen Gasgeschwindigkeiten zwischen Rand und Mitte des Saturators bewirken, dass der Gasstrom nicht gleichmäßig mit Dampf gesättigt wird. Die Leistungsfähigkeit des Saturators ist daher begrenzt. Dies wirkt sich nachteilig auf den Kondensationsprozess aus. Partikel in einem nur unzureichend mit Dampf gesättigtem Aerosol wachsen geringer und werden beim anschließenden Zählvorgang in der Messzelle nicht mit erfasst.

Aus der US-PS 6,829,044 B2 ist ein Kondensationskernzähler bekannt, bei dem das zugeführte Gas vor dem Eintritt in den Saturator einen erwärmten Kanal durchströmt. Außerdem wird das Aerosol über kleine Öffnungen in die Saturatorkammer eingedüst, beispielsweise mit einer Geschwindigkeit von 10 m/s. Dadurch sollen ein Intensives Mischen mit dem dampfbeladenen Gas und eine schnellere Sättigung erreicht werden.

Durch das Eindüsen von Aerosol in die Saturatorkammer wird eine turbulente Strömung erzeugt. Eine turbulente Strömung ist jedoch von Nachteil, da Partikel verloren gehen und während des Zählvorganges mit größeren Partikelverlusten zu rechnen ist. Dadurch wird die Leistungsfähigkeit des CPC's beeinträchtigt.

Der Erfindung liegt die Aufgabe zugrunde, einen Kondensationspartikelzähler zu schaffen, der sich durch eine höhere Leistungsfähigkeit auszeichnet.

Erfindungsgemäß wird die Aufgabe durch die im Anspruch 1 angegebenen Merkmale gelöst. Vorteilhafte Ausgestaltungen und Weiterbildungen sind Gegenstand der Ansprüche 2 bis 14.

Als Lösung wird vorgeschlagen, dass im Strömungskanal des Saturators zentrisch ein als Stab ausgebildetes Verdrängungselement zur Vergleichmäßigung der Strömungsgeschwindigkeit des Aerosols angeordnet ist.

Der Verdrängungsstab kann im Saturator außerhalb des Strömungsweges für das Aerosol gehalten bzw. befestigt sein, vorzugsweise befindet sich die Befestigungsstelle an dem zur Eintrittsöffnung gegenüberliegenden Endabschnitt des Saturators. Die Befestigung des Verdrängungsstabes kann auf unterschiedliche Weise erfolgen. Der Verdrängungsstab kann z.B. eingepresst werden oder an dem endseitigen Abschlussstück angeformt sein, das auf den Saturatorkörper aufgeschraubt wird. Gemäß einer vorgesehenen Alternative, kann der Verdrängungsstab auch an der Eingangsseite des Saturators, in einer Halterung, befestigt sein.

Die Befestigung sollte so ausgeführt sein, dass durch diese die Strömung des Aerosols im Saturator wenig beeinträchtigt wird.

Die Querschnittsform des Verdrängungsstabes ist vorzugsweise an die Querschnittsform des Strömungskanals des Saturators angepasst. Bei einem rohrförmigen Strömungskanal sollte der Stab eine kreisrunde Querschnittsform aufweisen. Denkbar sind auch andere Querschnittsformen, wie z.B. die eines Vielecks. Die Oberfläche des Stabes, die mit dem Aerosol in Berührungskontakt gelangt, sollte so beschaffen sein, dass es möglichst nur zu geringen Störungen des Aerosolstromes kommt, also glatt sein.

Der Verdrängungsstab kann als Hohlstab oder als Vollstab ausgebildet sein. Bei einer Ausführung als Hohlstab kann der Anfangsabschnitt auch radiale Öffnungen aufweisen, über die Aerosol In den Strömungskanal des Saturators gelangt. Die Öffnungen müssen jedoch ausreichend groß sein, um eventuelle Turbulenzen auszuschließen.

Der Verdrängungsstab besteht vorzugsweise aus einem wärmeleitfähigen Material, wie z.B. Aluminium. Da der Saturatorblock in der Regel auch aus Aluminium besteht und auf die erforderliche Verdampfungswärme für die Arbeitsflüssigkeit erwärmt wird, wird der Verdrängungsstab mit erwärmt. Um den Verdrängungsstab kann auch ein dünnwandiges Hüllrohr angeordnet sein, das als Funktionselement dient. So kann z.B. über ein solches Hüllrohr von der Außenseite des Gerätes ein Verschlusselement betätigt werden, um im Bedarfsfall die Öffnung vom Saturator zum Kondensator flüssigkeitsdicht verschließen zu können. Das ist insbesondere bei Transporten des CPC's von Bedeutung, da keine Arbeitsflüssigkeit in die Messzelle gelangen darf. Das Hüllrohr ist somit integraler Bestandteil des Verdrängungsstabes.

Der Verdrängungsstab erstreckt sich über die gesamte Länge der Saturatorkammer.

Die Anordnung eines Verdrängungsstabes im Saturator bewirkt ein gleichmäßigeres Strömungsprofil, was eine kürzere Reaktionszeit auf Konzentrationsänderungen zur Folge hat. Dadurch wird das Zeitverhalten des CPC's nach einem Konzentrationssprung deutlich verbessert.

Außerdem wird eine homogenere Vermischung des Aerosols mit dem Dampf der Arbeitsflüssigkeit bewirkt.

Dies führt zu einem gleichmäßigeren Tröpfchenwachstum während der Kondensation im Kondensator. Zusätzlich wird durch den Verdrängungsstab bewirkt, dass unmittelbar hinter der Eintrittsöffnung des Aerosols im Saturator keine Toträume entstehen. Dies wirkt sich vorteilhaft auf die Ausbildung eines gleichmäßigeren Geschwindigkeitsprofils aus.

Der Saturator mit Verdrängungsstab kann im CPC sowohl vertikal als auch horizontal oder horizontal leicht geneigt angeordnet sein. Die jeweilige Anordnung des Saturators ist abhängig von der gerätetechnischen Auslegung des CPC's.

Gemäß einer bevorzugten Ausführung ist die Innenwandung des Strömungskanals des Saturators mit einem geschäumten Polyethylenrohr ausgekleidet, das mit Arbeitsflüssigkeit In Kontakt steht, die sich in einem Reservoir befindet. Anstelle eines geschäumten Polyethylenrohres kann auch ein Flizbelag oder ein poröses Keramikrohr eingesetzt werden.

Der Saturator Ist als blockförmiges Aluminiumbauteil mit mindestens einem Strömungskanal für das Aerosol ausgebildet und weist eine Heizeinrichtung auf, um die vom Polyethylenrohr aufgesaugte Arbeitsflüssigkeit zu verdampfen.

Die Erfindung soll nachstehend an einem Ausführungsbeispiel näher erläutert werden.

In der zugehörigen Zeichnung zeigen
- **Fig. 1**: eine vereinfachte schematische Darstellung des erfindungsgemäßen Kondensationspartikelzählers (CPC), als Längsschnitt,
- **Fig. 2**: einen Schnitt gemäß der Linie A-A in Fig. 1,
- **Fig. 3**: einen vergrößerten Ausschnitt einer weiteren Ausführungsvariante, als Längsschnitt, und

- **Fig. 4**: das Sprungverhalten eines CPC's mit und ohne Verdrängungsstab.

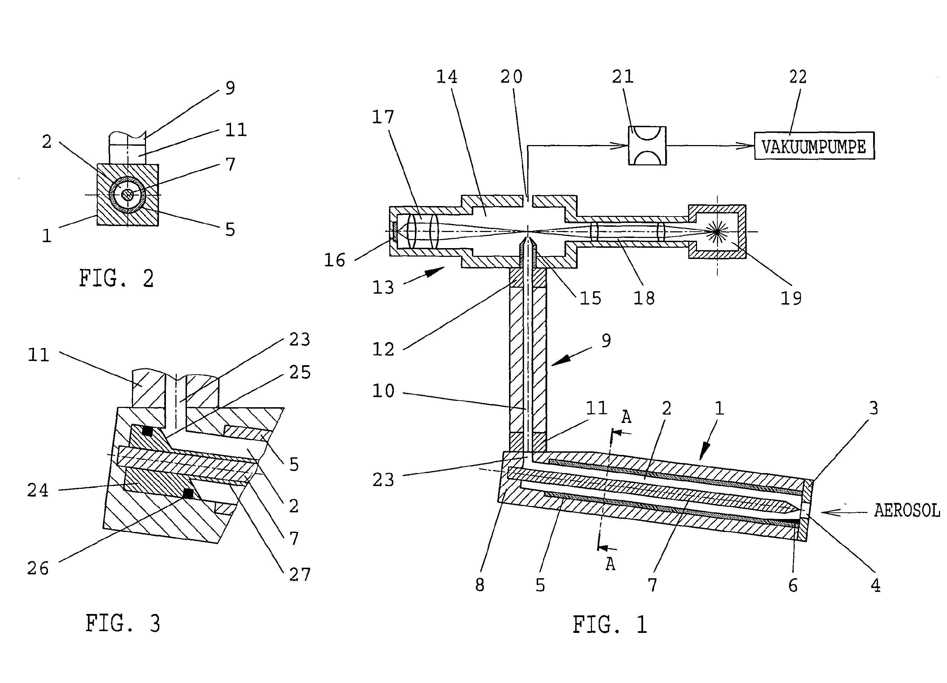

Der in den Figuren 1 und 2 gezeigte Kondensationspartikelzähler (CPC) besteht aus den Baugruppen Saturator 1, Kondensator 9 und optische Messzelle 13, die in einem nicht näher gezeigten Gehäuse angeordnet sind. Der Saturator 1 ist in einem Winkel von ca. 6 bis 7° geneigt angeordnet, ansteigend in Strömungsrichtung. Er besteht aus einem länglichen, quadratischen Aluminiumblock mit einem zentralen, ringförmigen Strömungskanal 2. Der Aluminiumblock ist mit einer nicht näher gezeigten elektrischen Heizeinrichtung ausgestattet. An der Eintrittsseite für das Aerosol befindet sich ein Anschlussstück 3 mit einer zentralen Eintrittsöffnung 4, über die das Aerosol in den Strömungskanal 2 gelangt. Im Strömungskanal 2 ist ein geschäumtes Polyethylenrohr 5 eingesetzt, das an der Innenwandung des rohrförmigen Kanals anliegt. Im Bereich der Eintrittsöffnung 4 befindet sich im unteren Teil des Saturators 1 eine Vertiefung, bzw. Reservoir 6, zur Aufnahme von Arbeitsflüssigkeit. Als Arbeitsflüssigkeit wird vorzugsweise Butanol eingesetzt. Der untere Teil des vorderen Abschnittes des geschäumten Polyethylenrohres 5 taucht in das mit Butanol gefüllte Reservoir 6 ein und saugt die Flüssigkeit Butanol wie ein Schwamm auf. Im Strömungskanal 2 des Saturators 1 ist zentrisch ein Verdrängungsstab 7 angeordnet. Dieser ist als kreisrunder Vollstab ausgeführt und am zur Eintrittsöffnung 4 gegenüberliegenden Abschnitt 8 befestigt. Die Befestigung des Verdrängungsstabes 7 kann z.B. durch eine Presspassung oder mittels Gewinde erfolgen. Der Verdrängungsstab 7 erstreckt sich bis in die Nähe der Eintrittsöffnung 4, wobei das vordere Ende des Stabes 7 spitzförmig ausgebildet ist. Der Verdrängungsstab 7 besteht aus einem wärmeleitenden Material (Aluminium) und wird infolge der Erwärmung des Saturators 1 mit erwärmt. Die mit dem Aerosol in Kontakt kommende Oberfläche des Stabes 7 sollte möglichst glatt sein, um die Strömung nicht nachteilig zu beeinflussen.

Am Strömungsausgang des Saturators 1 ist der Kondensator 9 angeschlossen. Der Kondensator 9 ist von einer nicht näher dargestellten Kühlvorrichtung umgeben und besitzt einen zentralen Kanal oder eine Kammer 10. Der Kondensator 9 ist vertikal angeordnet und über geeignete Befestigungsmittel mit dem Saturator 1 verbunden, wobei zwischen dem Saturator 1 und dem Kondensator 9 ein thermische Isolierbuchse 11 angeordnet ist, um einen Wärmeübergang vom Saturator 1 auf den Kondensator 9 zu verhindern. Auf dem Kondensator 9 sitzt die optische Messzelle 13. Zwischen der Messzelle 13 und dem Kondensator 9 ist ebenfalls eine thermische Isolierbuchse 12 angeordnet. Am Eintritt in die Messkammer 14 ist eine Düse 15 angeordnet. Die Messzelle 13 ist zur Erfassung der Anzahl der im Aerosol enthaltenen Partikel in an sich bekannter Bauart mit einem optischen Empfänger 16, einem Fotodiodendetektor, einem Linsensystem als Empfangsoptik 17, einer Laserlichtquelle 19 und einem Linsensystem als Laseroptik 18 ausgerüstet. Hinter dem Auslass bzw. der Auslassdüse 20 der Messkammer 14 sind eine kritische Düse 21 und eine Vakuumpumpe 22 angeschlossen, über die der Volumenstrom des Aerosols erzeugt wird. Die Pumpe 22 kann entweder innerhalb oder außerhalb des CPC-Gerätes angeordnet sein.

In der Fig. 3 ist der hintere Teil des Saturators 1 einer weiteren Ausführungsvariante dargestellt. Diese unterscheidet sich von der in den Figuren 1 und 2 gezeigten Ausführung dadurch, dass die Austrittsöffnung 23 des Saturators 1 mittels einer Absperrvorrichtung flüssigkeitsdicht verschließbar ist. Diese besteht aus einem in den ringförmigen Strömungskanal 2 eingesetzten Verschlusskörper 24, dessen in Richtung Eintrittgöffnung 4 zeigende Stirnseite 25 abgeschrägt ist. Dadurch ist im Öffnungszustand der untere Abschnitt des Verschlusskörpers 24 länger als der obere Abschnitt, der hinter der Austrittsöffnung 23 endet und diese freigibt. Der Verschlusskörper 24 ist mit einer umlaufenden Dichtung (0-Ring) 26 versehen und an der schräg verlaufenden Stirnseite 25 mit einem dünnwandigen Hüllrohr 27 verbunden, das sich bis zur Eintrittsöffnung 4 des Saturators 1 erstreckt und als Funktionselement für die Betätigung des Verschlusskörpers 24 dient. Das Hüllrohr 27 umgibt den Verdrängungsstab 7 und liegt an diesem an. Der Verdrängungsstab 7 ist durch den Verschlusskörper 24 geführt und endseitig an der Stirnwand der Saturatorkammer 2 befestigt. Das nicht gezeigte vordere Ende des Hüllrohres 27 besitzt eine Aufnahme für einen über die Eintrittsöffnung 4 einführbaren Steckschlüssel. Durch eine manuelle Drehbewegung des aufgesetzten Schlüssels wird das Hüllrohr 27 mit dem Verschlusskörper 24 in die Schließstellung gedreht. Der längere Abschnitt des Verschlusskörpers 24 befindet sich nunmehr an der oberen Seite und sperrt die Austrittsöffnung 23 des Saturators 1 flüssigkeitsdicht ab. Das CPC-Gerät kann somit problemlos transportiert werden, ohne der Gefahr ausgesetzt zu sein, dass angesammeltes Butanol in die Messzelle gelangen kann. Vor einer Wiederinbetriebnahme des Gerätes wird der Verschlusskörper 24 wieder in seine Ausgangsstellung bewegt.

Die Funktionsweise des CPC's ist folgende:
Mit Inbetriebnahme des CPC's wird der Aluminiumblock, der Saturator 1, über die nicht näher gezeigte Heizeinrichtung auf Betriebstemperatur erwärmt. Im Reservoir 6 des Saturators 1 befindet sich Butanol als Arbeitsflüssigkeit. Beim Einsatz von Butanol wird der Saturator auf eine Temperatur von ca. 30 bis 40 °C erwärmt. Das im Saturator 1 angeordnete geschäumte PE-Rohr ist mit Butanol getränkt, das aufgrund der Erwärmung verdampft. Über die Eintrittsöffnung 4 gelangt bei Betrieb der Vakuumpumpe 22 Aerosol in die ringförmige Saturatorkammer 2. Der gebildete Butanoldampf bewegt sich nur durch Diffusion. Durch den in der Saturatorkammer 1 angeordneten Verdrängungsstab 7 entsteht ein gleichmäßiges Geschwindigkeitsprofil des Aerosolstromes. Außerdem wird durch den Verdrängungsstab der Abstand der im Aerosol enthaltenen Partikel zur Wandung des PE-Rohres klein gehalten.

Bei einem Innendurchmesser des ringförmigen Strömungskanals 2 von ca. 10 bis 16 mm beträgt der Außendurchmesser des Verdrängungsstabes ca. 5 bis 8 mm. Die konkrete Dimensionierung wird in Abhängigkeit von der technischen Auslegung und Baugröße des CPC's bestimmt. Mittels dieser Maßnahmen werden eine homogene Vermischung und schnelle Sättigung des Aerosols mit Butanoldampf erreicht. Von Vorteil ist auch, dass der aus Aluminium bestehende Verdrängungsstab 7 aufgrund seiner guten Wärmeleitfähigkeit schnell mit erwärmt wird. Dadurch entsteht in der Saturatorkammer 2 ein annähernd gleiches Temperaturniveau. Durch den Verdrängungsstab 7 wird auch die Bildung von Toträumen verhindert, die zu Turbulenzen führen. Das mit Butanoldampf gesättigte Aerosol strömt am Ende des Saturators 1 um den Verdrängungsstab 7 und über die Austrittsöffnung 23 in den gekühlten Kondensator 9, wobei die Störung der Aerosolströmung durch den Verdrängungsstab 7 vergleichsweise gering ist.

In diesem kondensiert der übersättigte Dampf auf den im Aerosol enthaltenen Partikeln. Durch den Kondensationsprozess findet ein Partikelwachstum, bis auf eine Größe von einigen Mikrometern, statt. Das in der Kondensationskammer 10 anfallende Kondensat, das aus im Gasstrom enthaltener Feuchtigkeit und kondensiertem Butanol besteht, wird über eine Leitung abgepumpt und entsorgt.

Die mit Butanoldampf aufkondensierten Partikel gelangen von der Kondensatorkammer 10 über die Düse 15 mit erhöhter Geschwindigkeit in die Messkammer 14 der Messzelle 13, die als Laser-Optik-Einheit ausgeführt ist. Die im Gasstrom enthaltenen Partikel kreuzen einen Laserstrahl, wodurch jedes Tröpfchen (Partikel) Licht auf eine Fotodiode streut. Diese Signale werden auf elektronischem Weg kontinuierlich gezählt und als Partikel/cm³ im Sekundentakt auf einem LCD-Bildschirm angezeigt und gespeichert oder auf ein externes Datenverarbeitungsgerät übertragen.

Der Flüssigkeitsstand im Reservoir 6 des Saturators 1 wird mittels eines Sensors überwacht und bei zu niedrigem Flüssigkeitsstand wird automatisch Butanol aus einem Vorratsbehälter nachgefüllt.

Versuchsergebnisse belegen, dass der Verdrängungsstab zu einer wesentlichen Verkürzung der Reaktionszeit in Bezug auf Änderungen der Konzentration im Aerosol führt:

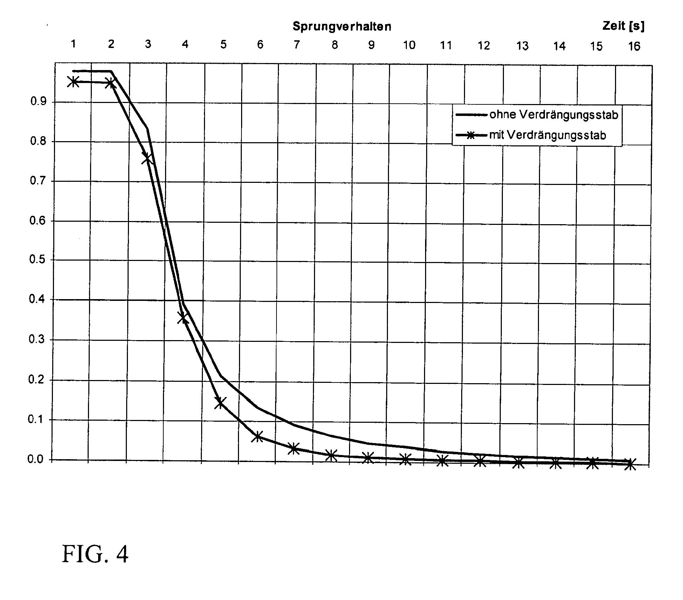

In der Fig. 4 ist das Sprungverhalten eines CPC's mit und ohne Verdrängungsstab dargestellt.

Auf der Ordinate ist als relative Skala ein Bereich von 0 bis 1 für die Konzentration des Aerosols angegeben.

Für die Versuche wurden ansonsten identische CPC's eingesetzt, die sich lediglich dadurch unterscheiden, dass im Saturator des einen CPC's ein Verdrängungsstab angeordnet ist und in dem anderen CPC nicht.

Die sich aus den Messwerten ergebenden Kurvenverläufe zeigen deutlich, dass ein CPC, dessen Saturator mit einem erfindungsgemäßen Verdrängungsstab ausgerüstet ist, wesentlich schneller auf Konzentrationsänderungen im Aerosol reagiert. Das durch den Verdrängungsstab bewirkte gleichmäßigere Geschwindigkeitsprofil führt zur Verbesserung des Sprungverhaltens bei Änderung der Konzentration im Aerosol.

## Patentansprüche

1. Kondensationspartikelzähler zur Bestimmung der Konzentration von in einem Gasstrom enthaltenen Partikeln (Aerosol), bestehend aus einem beheizbaren Saturator (1) mit einem rohrförmigen Strömungskanal (2) mit einer porösen Struktur oder einer porösen Einlage (5) zur Aufnahme von zu verdampfender Arbeitsflüssigkeit, wobei das zugeführte Aerosol durch die verdampfte Arbeitsflüssigkeit erwärmt und gesättigt wird, einem nachgeschalteten Kondensator (9) zur Übersättigung und Erzielung eines Kondensationswachstums der im Aerosol enthaltenen Partikel, einer optischen Messzelle (13) zur zahlenmäßigen Erfassung der im Aerosol enthaltenen Partikel und einer Pumpe (22) zum Transport des Aerosols entlang des Strömungsweges (2, 10, 20), **dadurch gekennzeichnet, dass** im Strömungskanal (Saturatorkammer) (2) des Saturators (1) zentrisch ein als Stab (7, 27) ausgebildetes Verdrängungselement zur Vergleichmäßigung der Strömungsgeschwindigkeit des Aerosols angeordnet ist.

2. Kondensationspartikelzähler nach Anspruch 1, **dadurch gekennzeichnet, dass** der Stab (7) im Saturator (1) außerhalb des Strömungsweges (2,10, 20) für das Aerosol gehalten bzw. befestigt ist.

3. Kondensationspartikelzähler nach einem der Ansprüche 1 oder 2, **dadurch gekennzeichnet, dass** der Stab (7) an dem zur Eintrittsöffnung (4) gegenüberliegenden Endabschnitt (8) des Saturators (1) befestigt ist.

4. Kondensationspartikelzähler nach einem der Ansprüche 1 bis 3, **dadurch gekennzeichnet, dass** der Stab (7) an der Seite des Saturators (1) gehalten ist, an der sich die Eintrittsöffnung (4) befindet.

5. Kondensatlonspartikelzähler nach einem der Ansprüche 1 bis 4, **dadurch gekennzeichnet, dass** der Stab (7) als Hohlstab oder Vollstab ausgebildet ist.

6. Kondensationspartikelzähler nach einem der Ansprüche 1 bis 5, **dadurch gekennzeichnet, dass** der Hohistab einen Anfangsabschnitt mit mehreren Löchern besitzt, über die das Aerosol in die Saturatorkammer (2) gelangt.

7. Kondensationspartikelzähler nach einem der Ansprüche 1 bis 6, **dadurch gekennzeichnet, dass** der Stab (7) eine kreisrunde oder vieleckförmige Querschnittsform besitzt.

8. Kondensationspartikelzähler nach einem der Ansprüche 1 bis 7, **dadurch gekennzeichnet, dass** der Stab (7) von einem dünnwandigen Hüllrohr (27) umgeben ist, das als Funktionselement dient.

9. Kondensatlonspartlkelzähler nach einem der Ansprüche 1 bis 8, **dadurch gekennzeichnet, dass** der Stab (7) aus einem wärmeleitfähigen Material besteht.

10. Kondensationspartikelzähler nach einem der Ansprüche 1 bis 9, **dadurch gekennzeichnet, dass** sich der Stab (7. 27) über die gesamte Länge der Saturatorkammer (2) erstreckt.

11. Kondensationspartikelzähler nach einem der Ansprüche 1 bis 10, **dadurch gekennzeichnet, dass** die mit dem Aerosol in Berührungskontakt gelangende Oberfläche des Stabes (7, 27) glatt ausgebildet ist.

12. Kondensationspartikelzähler nach einem der Ansprüche 1 bis 11, **dadurch gekennzeichnet, dass** der Saturator (1) vertikal, horizontal oder horizontal leicht geneigt, in Strömungsrichtung ansteigend, angeordnet ist.

13. Kondensationspartikelzähler nach einem der Ansprüche 1 bis 12, **dadurch gekennzeichnet, dass** die Innenwandung des Strömungskanals (2) des Saturators (1) mit einem geschäumten Polyethylenrohr (5) ausgekleidet ist, das in Nähe der Aerosolelntrittsöffnung (4) mit Arbeitsflüssigkeit in Kontakt gelangt, die sich in einem Reservoir (6) befindet.

14. Kondensationspartikelzähler nach einem der Ansprüche 1 bis 13, **dadurch gekennzeichnet, dass** der Saturator (1) als blockförmiges Aluminiumbautell mit mindestens einem Strömungskanal (2) für das Aerosol ausgebildet ist und eine Heizeinrichtung aufweist.
